# EUROPÄISCHE PATENTSCHRIFT

(11) **EP 1 904 810 B1**
(45) Veröffentlichungstag und Bekanntmachung des Hinweises auf die Patenterteilung: **08.03.2017**
(21) Anmeldenummer: 06742934.0
(22) Anmeldetag: 16.05.2006
(51) Int. Cl.: G01D 13/26, G01D 11/28

(54) **ANZEIGEEINRICHTUNG ZUR ANALOGEN ANZEIGE VON GRÖSSEN, PARAMETERN ETC.**
DISPLAY DEVICE FOR DISPLAYING VARIABLES, PARAMETERS ETC. IN AN ANALOG MANNER
DISPOSITIF D'AFFICHAGE ANALOGIQUE DE GRANDEURS, DE PARAMETRES, ETC.

(30) Priorität: 20.07.2005 DE 102005033888
(43) Veröffentlichungstag der Anmeldung: 02.04.2008
(73) Patentinhaber: paragon AG, 33129 Delbrück (DE)
(72) Erfinder: MOOSMANN, Thomas, 78737 Fluorn-Winzeln (DE)
(74) Vertreter: Lelgemann, Karl-Heinz
(86) Internationale Anmeldenummer: PCT/EP2006/004590
(87) Internationale Veröffentlichungsnummer: WO 2007/009523

(56) Entgegenhaltungen:
- EP-A- 1 077 363
- DE-A1- 19 538 547
- US-A- 5 546 888
- US-A- 5 603 283
- US-A- 5 741 058
- US-A1- 2002 117 988

## Beschreibung

Die Erfindung bezieht sich auf eine Anzeigeeinrichtung zur analogen Anzeige von Größen und/oder Parametern nach dem Oberbegriff des Patentanspruchs 1.

Derartige Anzeigeeinrichtungen können dazu dienen, quasi beliebige Parameter, Größen etc. technischer, physikalischer, chemischer, biologischer oder anderer Art so darzustellen, dass ein Wert der betreffenden Größe bzw. des betreffenden Parameters an der Anzeigeeinrichtung ablesbar ist, wobei mittels dem beleuchteten Anzeigeelement, wie es z.B. in der EP 1 371 522 A2 gezeigt ist, die Sichtbarkeit des Anzeigeelements verbessert werden kann.

Aus der EP 1 077 363 A2 ist eine Anzeigeeinrichtung zur analogen Anzeige bekannt, die einen Zeiger hat, zu dem eine als eigentliches Anzeigeelement dienende Zeigerfahne und eine Zeigerachse gehören. Der Antrieb des Zeigers wird mittels eines Zeigerantriebs bewerkstelligt, der in geeigneter Weise auf die Zeigerachse einwirkt bzw. diese dreht, so dass sich entsprechend eine Schwenkbewegung der Zeigerfahne ergibt, die mechanisch mit der Zeigerachse verbunden ist. Zu der Anzeigeeinrichtung gehört des Weiteren eine Leiterplatte, die der Steuerung des Zeigerantriebs dient. Die Zeigerfahne kann beleuchtet werden.

Aus der US 5,741,058 ist ein Anzeigedisplay bekannt, in dem mehrere Anzeigeeinrichtungen angeordnet sind. Hierbei sind unterschiedlichen Anzeigeeinrichtungen in einer bestimmten Ausführungsform unterschiedliche Farben zugeordnet.

Aus der DE 195 38 547 A1 ist eine Anzeigeeinrichtung zur analogen Anzeige bekannt, zu der ein Zeigerantriebssystem, ein Zeiger, der mittels des Zeigerantriebssystems bzw. Motors verstellbar ist, und eine Leiterplatte mit Bauteilen gehören, mittels denen den anzeigbaren Größen, Parametern etc. entsprechende Signale empfangbar sind, wobei das Zeigerantriebssystem bzw. der Motor entsprechend den empfangenen Signalen steuer- bzw. regelbar ist. Des Weiteren ist eine Lichtquelle vorhanden, mittels der der Zeiger beleuchtbar ist und die als LED so ausgebildet sein kann, dass sie Licht in unterschiedlichen Farben abstrahlen kann.

Hierbei wird die unterschiedliche Farbgebung dazu eingesetzt, unterschiedlichen Wertebereichen eines Parameters, z.B. unterschiedlichen Wertebereichen der Drehzahl, unterschiedliche Farben zuzuordnen.

Ausgehend von dem vorstehend geschilderten Stand der Technik liegt der Erfindung die Aufgabe zugrunde, die gattungsgemäße Anzeigeeinrichtung derart weiterzubilden, dass mit einem möglichst geringen technisch-konstruktiven Aufwand eine weitaus größere Bandbreite hinsichtlich der Darstellbarkeit von Parametern, Größen etc. ermöglicht und ein dauerhaft zuverlässiger Betrieb gesichert ist.

Diese Aufgabe wird erfindungsgemäß dadurch gelöst, dass der Motor der Anzeigeeinrichtung als Schrittmotor ausgebildet ist und dass unterschiedlichen, mittels der Anzeigeeinrichtung darstellbaren Größen und/oder Parametern unterschiedliche Farben der mittels der LED abstrahlbaren Lichtstrahlung zugeordnet sind.

Dadurch, dass der Motor als Schrittmotor ausgestaltet ist, kann dauerhaft ein sicherer Betrieb der Anzeigeeinrichtung gewährleistet werden. Durch die Zuordnung unterschiedlicher Farben an unterschiedliche Parameter ist es möglich, mittels ein und derselben Anzeigeeinrichtung unterschiedliche technische Parameter, Größen etc. darzustellen.

Die LED der erfindungsgemäßen Anzeigeeinrichtung wird hinsichtlich der Farbe des von ihr abgestrahlten Lichts mittels des Elektronikteils der Anzeigeeinrichtung gesteuert, wobei bestimmten Farben des von der LED abgestrahlten Lichts bestimmte Informationsinhalte zugeordnet sind.

So sind unterschiedlichen mittels der Anzeigeeinrichtung darstellbaren Größen, Parametern etc. unterschiedliche Farben der mittels der LED abstrahlbaren Lichtstrahlung zugeordnet. Mittels ein und derselben Anzeigeeinrichtung kann eine der Anzahl der zur Verfügung stehenden Farben entsprechende Anzahl von Größen, Parametern etc. angezeigt werden, und zwar in derselben Qualität.

Zusätzlich ist es möglich, unterschiedlichen Größenbereichen der mittels der Anzeigeeinrichtung anzuzeigenden Größen bzw. Parameter unterschiedliche Farben der mittels der LED abstrahlbaren Lichtstrahlung zuzuordnen. Hierbei kann dann der entsprechende Parameter bzw. die entsprechende Größe über einen ausgedehnten Wertebereich exakter als bei aus dem Stand der Technik bekannten Anzeigeeinrichtungen dargestellt werden, wobei der apparatetechnische Aufwand praktisch unverändert bleibt.

Als Schrittmotor kann vorteilhaft ein Zwei-Phasen-Schrittmotor zum Einsatz kommen.

Um mittels des Schrittmotors in einfacher Weise die Bewegung des Zeigers zu bewirken, ist es vorteilhaft, wenn der Schrittmotor eine Hohlachse aufweist, in der der Zeiger aufgenommen ist. So kann mittels eines Abtriebsglieds des Schrittmotors in einfacher Weise eine Bewegung des Zeigers bewirkt werden.

Hierbei kann der Zeiger vorteilhaft einen ersten, in die Hohlachse des Schrittmotors vorragenden Abschnitt und einen zweiten, zu dem ersten geneigten Abschnitt aufweisen, der im Zusammenwirken mit einer Skala den Wert der mittels der Anzeigeeinrichtung darzustellenden Größe anzeigt.

Um das von der LED abgestrahlte Licht möglichst vollständig in den Zeiger einzuleiten, ist es vorteilhaft, wenn an dem dem Elektronikteil zugewandten Ende der Hohlachse des Schrittmotors die LED angeordnet ist.

Die LED kann dann unmittelbar am schrittmotorseitigen Ende des Zeigers angeordnet sein, wobei bei einer derartigen Anordnung die Strahlungsverluste minimiert werden.

Die LED kann alternativ Bestandteil des Elektronikteils der Anzeigevorrichtung oder aber des Schrittmotors derselben sein.

Im Folgenden wird die Erfindung anhand einer Ausführungsform unter Bezugnahme auf die Zeichnung näher erläutert.

Es zeigen:
- Figur 1: eine Vorderansicht eines Ausführungsbeispiels einer erfindungsgemäßen Anzeigeeinrichtung; und
- Figur 2: den Schnitt A - A in Figur 1.

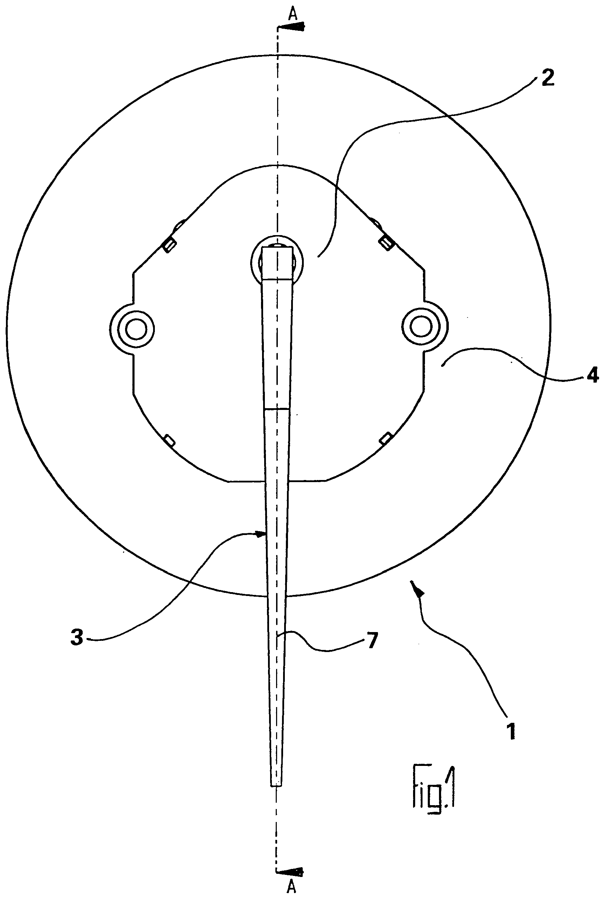

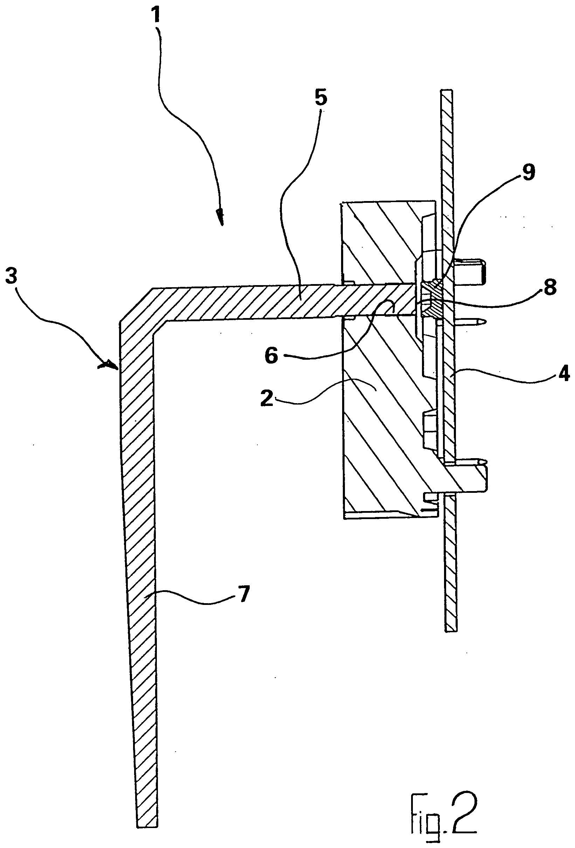

Eine anhand der Figuren 1 und 2 prinzipiell dargestellte Ausführungsform einer erfindungsgemäßen Anzeigeeinrichtung 1 dient dazu, beliebige technische, physikalische, chemische, biologische etc. Größen und/oder Parameter analog darzustellen.

Hierzu weist die Anzeigeeinrichtung 1 im dargestellten Ausführungsbeispiel einen Zwei-Phasen-Schrittmotor 2, einen Zeiger 3 als Anzeigeelement und ein Elektronikteil 4 auf.

Der in den Figuren lediglich prinzipiell dargestellte Zwei-Phasen-Schrittmotor 2 dient dazu, den Zeiger 3 zu verstellen. Der Zeiger 3 hat im dargestellten Ausführungsbeispiel einen ersten Abschnitt 5, der in eine Hohlachse 6 des Zwei-Phasen-Schrittmotors 2 vorsteht. In der Hohlachse 6 ist der erste Abschnitt 5 des Zeigers 3 drehbar aufgenommen. Mittels eines in den Figuren nicht gezeigten Abtriebsteils des Zwei-Phasen-Schrittmotors 2 wird eine Drehung des ersten Abschnitts 5 und damit eine Schwenkung eines zweiten Abschnitts 7 des Zeigers 3 bewirkt, wobei durch das Zusammenwirken des zweiten Abschnitts 7 des Zeigers 3 mit einer Skala od.dgl. der Wert der Größe, des Parameters etc. angezeigt wird.

Der Zeiger 3 ist im dargestellten Ausführungsbeispiel transparent bzw. durchsichtig ausgebildet. Am schrittmotorseitigen Ende des Zeigers 3 liegt der betreffenden Stirnfläche 8 des ersten Abschnitts 5 eine Lichtquelle in Form einer LED 9 gegenüber, die Licht unmittelbar in den transparenten Zeiger 3 hinein abstrahlt. Durch das von der LED 9 abgestrahlte Licht wird der Zeiger 3 beleuchtet.

Im in den Figuren 1 und 2 gezeigten Ausführungsbeispiel ist die LED 9 am Elektronikteil 4 der Anzeigeeinrichtung 1 angebracht. Beim Verbinden des Zwei-Phasen-Schrittmotors 2 mit dem Elektronikteil 4 gerät die LED 9 in Gegenüberlage zur Stirnfläche 8 des ersten Abschnitts 5 des Zeigers 3.

Mittels des Elektronikteils 4 werden Signale empfangen, die den mittels der Anzeigeeinrichtung 1 anzuzeigenden Größen, Parametern etc. entsprechen. Diese empfangenen Signale werden im Elektronikteil 4 bearbeitet und zur Ansteuerung des Zwei-Phasen-Schrittmotors 2 verwendet, der somit den vom Elektronikteil 4 empfangenen Signalen entsprechend steuer- bzw. regelbar ist.

Die LED 9 ist so gestaltet, dass sie Licht in unterschiedlichen Farben abstrahlen kann. Auch die Einstellung der Farbe des von der LED 9 abzustrahlenden Lichts erfolgt mittels des Elektronikteils 4, wobei auch für die Vorgabe der Farbe die seitens des Elektronikteils 4 empfangenen Signale ursächlich sind.

Es ist möglich, unterschiedlichen, mittels der Anzeigeeinrichtung 1 anzuzeigenden Größen bzw. Parametern unterschiedliche Farben der LED 9 zuzuordnen. Dann kann mit ein und derselben Anzeigeeinrichtung 1 eine vergleichsweise große Anzahl von Größen, Parametern etc. dargestellt werden, wobei jede Farbe des Zeigers 3 einer bestimmten Größe bzw. einem bestimmten Parameter zugeordnet ist.

Zusätzlich ist es möglich, unterschiedlichen Größenbereichen einer anzuzeigenden Größe bzw. eines anzuzeigenden Parameters unterschiedliche Farben der LED 9 zuzuordnen. So kann dann über einen im Vergleich zum Stand der Technik erheblich vergrößerten Wertebereich einer mittels der Anzeigeeinrichtung 1 anzuzeigenden Größe bzw. eines Parameters eine exakte und sehr deutliche Anzeige des jeweils aktuellen Werts erfolgen.

Selbstverständlich ist es auch möglich, unterschiedliche Aggregatzustände eines mittels der Anzeigeeinrichtung 1 hinsichtlich eines Parameters darzustellenden Stoffes od.dgl. durch unterschiedliche Farben des von der LED 9 abgestrahlten Lichts darzustellen.

Ein in den Figuren nicht gezeigtes Messgerät, das mit der vorstehend geschilderten Anzeigeeinrichtung 1 ausgerüstet ist, kann mit einem Hinweis versehen werden, wobei aus diesem Hinweis hervorgeht, welche Farben des Zeigers welchen Größen, Parametern etc. bzw. Größenbereichen zugeordnet sind.

## Patentansprüche

1. Anzeigeeinrichtung zur analogen Anzeige von Größen und/oder Parametern, mit einem Motor (2), einem Zeiger (3), der mittels des Motors (2) verstellbar ist, einem Elektronikteil (4), mittels dem den anzeigbaren Größen und/oder Parametern entsprechende Signale empfangbar sind und der Motor (2) entsprechend den empfangenen Signalen steuer- bzw. regelbar ist, und einer Lichtquelle (9), mittels der der Zeiger (3) beleuchtbar und die als LED (9) so ausgebildet ist, dass mittels ihr Lichtstrahlung in unterschiedlichen Farben abstrahlbar ist, **dadurch gekennzeichnet, dass** der Motor (2) als Schrittmotor (2) ausgebildet ist und dass unterschiedlichen, mittels der Anzeigeeinrichtung (1) darstellbaren Größen und/oder Parametern unterschiedliche Farben der mittels der LED (9) abstrahlbaren Lichtstrahlung zugeordnet sind.

2. Anzeigeeinrichtung nach Anspruch 1, deren Schrittmotor als Zwei-Phasen-Schrittmotor (2) ausgebildet ist.

3. Anzeigeeinrichtung nach Anspruch 1 oder 2, deren Schrittmotor (2) eine Hohlachse (6) aufweist, in der der Zeiger (3) aufgenommen ist.

4. Anzeigeeinrichtung nach Anspruch 3, bei der an dem dem Elektronikteil (4) zugewandten Ende der Hohlachse (6) des Schrittmotors (2) die LED (9) angeordnet ist.

5. Anzeigeeinrichtung nach einem der Ansprüche 1 bis 4, deren LED (9) Bestandteil des Schrittmotors (2) ist.

6. Anzeigeeinrichtung nach einem der Ansprüche 1 bis 4, deren LED (9) Bestandteil des Elektronikbauteils (4) der Anzeigeeinrichtung (1) ist.

7. Anzeigeeinrichtung nach einem der Ansprüche 1 bis 6, bei der unterschiedlichen Größenbereichen einer bzw. eines mittels der Anzeigeeinrichtung (1) darstellbaren Größe und/oder Parameters unterschiedliche Farben der mittels der LED (9) abstrahlbaren Lichtstrahlung zugeordnet sind.

8. Anzeigeeinrichtung nach einem der Ansprüche 1 bis 7, bei der die LED (9) unmittelbar am schrittmotorseitigen Ende des Zeigers (3) angeordnet ist.

## Claims

1. Display device (1) for the analogue display of variables and/or parameters, having a motor (2), a pointer (3) which is displaceable by means of the motor (2), an electronic part (4) via which signals corresponding to the variables and/or parameters to be displayed can be received, and the motor (2) can be controlled or regulated as a function of the signals received, and having a light source (9) by means of which the pointer (3) can be illuminated and which is designed as a LED (9) in such manner that light radiation can be radiated in various colours by means thereof, **characterised in that** the motor (2) is designed as a stepping motor (3) and that different colours of the light radiation that can be radiated by means of the LED (9) are assigned to different variables and/or parameters that can be displayed by means of the display device (1).

2. Display device according to claim 1, of which the stepping motor is designed as a two-phase stepping motor (2).

3. Display device according to claim 1 or 2, of which the stepping motor (2) has a hollow axle (6) in which the pointer (3) is accommodated.

4. Display device according to claim 3, in which the LED (9) S arranged on the end of the hollow axle (6) closest to the electronic part (4).

5. Display device according to any one of claims 1 to 4, of which the LED (9) is a component of the stepping motor (2).

6. Display device according to any one of claims 1 to 4, of which the LED (9) is a component of the electronic part (4) of the display device (1).

7. Display device according to any one of claims 1 to 6, in which different colours of the light radiation that can be radiated by means of the LED (9) are assigned to different value ranges of a variable and/or parameter that can be displayed by means of the display device (1).

8. Display device according to any one of claims 1 to 7, in which the LED (9) is arranged at the very end of the pointer (3) that is closest to the stepping motor.

## Revendications

1. Dispositif d'affichage pour l'affichage analogique de valeurs et/ou de paramètres, comportant un moteur (2), un indicateur (3) qui est réglable au moyen du moteur (2), un élément électronique (4) au moyen duquel des signaux correspondants aux valeurs et/ou paramètres affichables peuvent être reçus et le moteur (2) peut être commandé ou réglé en fonction des signaux reçus et une source lumineuse (9) au moyen de laquelle l'indicateur (3) peut être éclairé et qui est réalisée sous forme de LED (9) de manière à ce que, au moyen de son rayonnement lumineux, elle puisse irradier dans différentes couleurs, **caractérisé en ce que** le moteur (2) est réalisé sous forme d'un moteur pas à pas (2) et que sont associées à divers valeurs et/ou paramètres différents pouvant être affichés au moyen du dispositif d'affichage (1) des couleurs différentes du rayonnement lumineux pouvant être irradié au moyen de la LED (9).

2. Dispositif d'affichage selon la revendication 1, dont le moteur pas à pas est réalisé sous forme d'un moteur pas à pas biphasé (2).

3. Dispositif d'affichage selon la revendication 1 ou 2, dont le moteur pas à pas (2) présente un axe creux (6) dans lequel l'indicateur (3) est reçu.

4. Dispositif d'affichage selon la revendication 3, dans lequel la LED (9) est disposée à l'extrémité tournée vers l'élément électronique (4) de l'axe creux (6) du moteur pas à pas (2).

5. Dispositif d'affichage selon une des revendications 1 à 4, dont la LED (9) fait partie intégrante de l'élément électronique (4) du moteur pas à pas (2).

6. Dispositif d'affichage selon une des revendications 1 à 4, dont la LED (9) fait partie intégrante de l'élément électronique (4) du dispositif d'affichage (1).

7. Dispositif d'affichage selon une des revendications 1 à 6, dans lequel sont associées à diverses plages de valeur d'une valeur et/ou d'un paramètre pouvant être représenté au moyen du dispositif d'affichage (1) des couleurs différentes du rayonnement lumineux pouvant être irradié au moyen de la LED (9)

8. Dispositif d'affichage selon une des revendications 1 à 7, dans lequel la LED (9) est disposée directement à l'extrémité située du côté du moteur pas à pas de l'indicateur (3).
